# EUROPEAN PATENT APPLICATION

(11) **EP 2 704 507 A2**
(43) Date of publication of application: **05.03.2014**
(21) Application number: 11795076.6
(22) Date of filing: 30.05.2011
(51) Int. Cl.: H04W 72/08, H04B 7/02

(54) **COORDINATED MULTI-POINT TRANSMISSION/RECEPTION METHOD, DEVICE AND SYSTEM**

(71) Applicant: Huawei Technologies Co., Ltd., Shenzhen, Guangdong 518129 (CN)
(72) Inventor: LOU, Qunfang, Guangdong518129 (CN); CHEN, Lina, Guangdong 518129 (CN)
(74) Representative: Pfenning, Meinig & Partner GbR
(86) International application number: PCT/CN2011/074886
(87) International publication number: WO 2011/157110

(57) **Abstract**

A method, a device, and a system for coordinated multi-point transmission/reception are provided. The method includes: obtaining a reference signal received power RSRP of cells in a measurement set of a user equipment UE; determining a coordinated set of the UE according to the RSRPs; obtaining a post-processing SINR of the UE in the coordinated set and a post-processing SINR of the UE in a serving cell; determining that the post-processing SINR of the UE in the coordinated set is greater than the post-processing SINR in the serving cell; and performing coordinated multi-point transmission/reception for the UE. According to the method, the device, and the system provided by the embodiments of the present invention, a coordinated set of each user equipment is selected based on an RSRP first; and then a user equipment for which CoMP is to be performed is determined based on an SINR. This can effectively suppress an impact of an interference suppression gain on CoMP, and can reduce solution complexity.

## Description

### TECHNICAL FIELD

The present invention relates to the field of network technologies, and in particular, to a method, a device, and a system for coordinated multi-point transmission/reception.

### BACKGROUND

CoMP (Coordinated Multi-point Transmission/reception, Coordinated Multi-point Transmission/Reception) is one of the key technologies for LTE-A (Long Term Evolution-Advanced, Long Term Evolution-Advanced), and is used to expand high-data rate coverage ranges and improve system average throughput, which may enhance performance for cell-edge users.

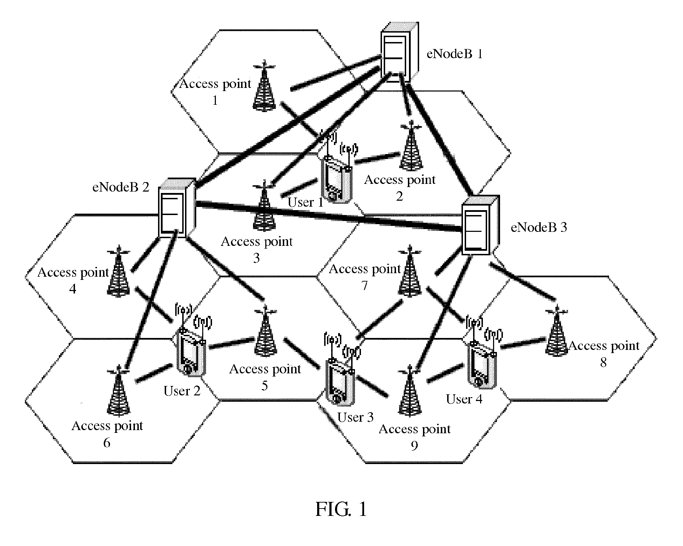

FIG. 1 shows a schematic diagram of system architecture according to the CoMP technology. CoMP is a technology for cooperative transmission and reception, where one base station (for example, eNodeB x in FIG. 1) may be connected to one or more access points (for example, Access Point x in FIG. 1), and one access point may include one or more antennas. Multiple user equipments (User Equipment, UE for short) (UE x) may be served by one or more access points of the same eNodeB or of different eNodeBs.

According to the CoMP technology, a signal of a serving cell and multiple coordinated cells may be transmitted or received at the same time. This is equivalent to increasing the number of antennas at a transmit end or a receive end to improve demodulation performance by using a multiple-input and multiple-output (Multiple Input Multiple Output, MIMO) receiver.

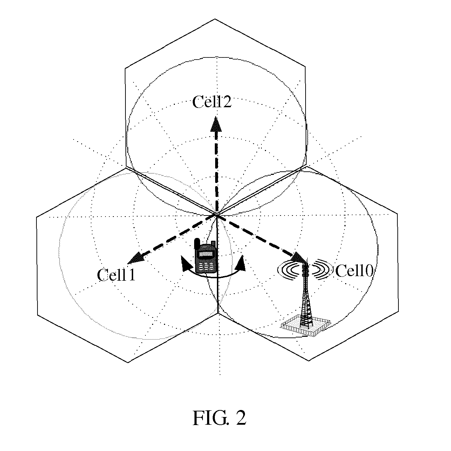

A primary principle of uplink-based intra-site (Intra-site) CoMP is to receive a signal of one user by using an antenna of different cells of the same eNodeB, which may obtain both a combined gain and an interference suppression gain of the signal received by multiple antennas. A user that is closer to an edge of two cells has a higher signal combined gain. For example, in FIG. 2, a user is at an edge of cells Cell 0 and Cell 1, and a serving cell thereof is Cell 1; hence, when the user is getting closer to the edge of the cell Cell 0, a signal, received by the cell Cell 0, of the user has a higher power and a higher signal combined gain.

A primary principle of inter-site (Inter-site) CoMP is to receive a signal of one user by using an antenna of different cells of different eNodeBs. This is similar to the intra-site principle, but requires eNodeBs to perform data interaction through a specific port, which generally is an X2 interface in actual use.

At present, a mainstream solution in the prior art is to select a CoMP coordinated set by using an RSRP (Reference Signal Receiving Power, Reference Signal Received Power) or a path loss. Both the RSRP and the path loss represent location information of a user equipment. An objective of selecting a coordinated set based on an RSRP is to select a cell having a highest received signal power; an objective of selecting a coordinated set based on a path loss is to select a cell that is closest to the UE. Evidently, selecting the coordinated set based on the RSRP and based on the path loss is the same in essence; that is, the CoMP coordinated set is selected both from the perspective of expected signal power enhancement, where no interference impact is considered.

The prior art, where a coordinated set is selected only by using an RSRP, cannot effectively obtain an interference suppression gain.

### SUMMARY

In view of this, embodiments of the present invention provide a method, a device, and a system for uplink coordinated multi-point transmission/reception, which can reduce implementation complexity while obtaining proper performance.

In order to achieve the above objective, in one aspect, the present invention provides a method for CoMP coordinated multi-point transmission/reception, including:
obtaining a reference signal received power RSRP of cells in a measurement set of a user equipment UE; determining a coordinated set of the UE according to the RSRPs; obtaining a post-processing SINR of the UE in the coordinated set and a post-processing SINR of the UE in a serving cell; determining that the post-processing SINR of the UE in the coordinated set is greater than the post-processing SINR in the serving cell; and performing coordinated multi-point transmission/reception for the UE.

In another aspect, the present invention further provides a device for coordinated multi-point transmission/reception, including: an RSRP obtaining unit, configured to obtain a reference signal received power RSRP of all cells in a measurement set of a user equipment UE; a coordinated set determining unit, configured to determine a coordinated set of the user equipment according to the RSRPs; an SINR obtaining unit, configured to obtain a Posted-SINR post-processing SINR of the UE in the coordinated set and a post-processing SINR of the UE in a serving cell; a first determining unit, configured to determine that the post-processing SINR of the UE in the coordinated set is greater than the post-processing SINR in the serving cell; and a transceiving unit, configured to perform coordinated multi-point transmission/reception for the UE.

In another aspect, an embodiment of the present invention further provides a system, where the system includes the device for coordinated multi-point transmission/reception described above.

According to the method, the device, and the system provided by the embodiments of the present invention, a coordinated set of each user equipment is selected based on an RSRP first; and then a user equipment for which CoMP is to be performed is determined based on an SINR. This can effectively suppress an impact of an interference suppression gain on CoMP, and can reduce solution complexity.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram illustrating a CoMP technology in the prior art;
FIG. 2 is a schematic diagram of cells according to an intra-site CoMP technology;
FIG. 3 is a schematic flowchart of a method for coordinated multi-point transmission/reception according to an embodiment of the present invention;
FIG. 4 is a schematic flowchart of a method for coordinated multi-point transmission/reception according to another embodiment of the present invention;
FIG. 5 is a schematic flowchart of a method for coordinated multi-point transmission/reception according to another embodiment of the present invention;
FIG. 6 is a schematic structural diagram of a device for coordinated multi-point transmission/reception according to an embodiment of the present invention;
FIG. 7 is a schematic structural diagram of a device for coordinated multi-point transmission/reception according to another embodiment of the present invention; and
FIG. 8 is a schematic structural diagram of a device for coordinated multi-point transmission/reception according to another embodiment of the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

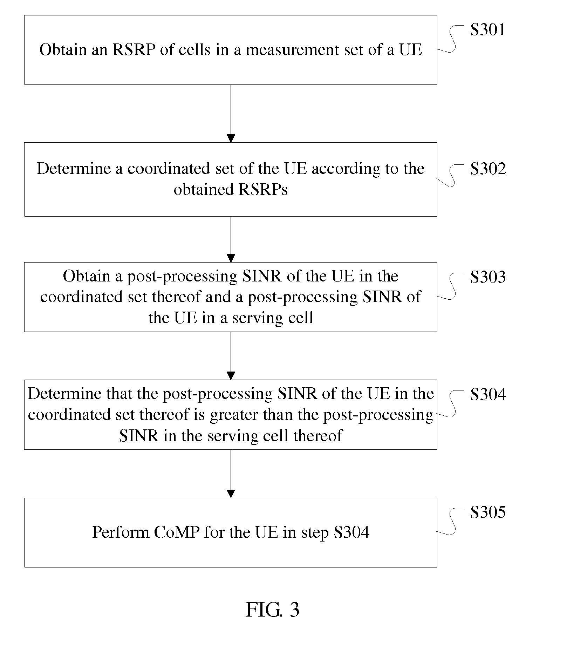

FIG. 3 is a schematic flowchart of a method for coordinated multi-point transmission/reception according to an embodiment of the present invention. An embodiment of the present invention provides a method for coordinated multi-point transmission/reception. As shown in FIG. 3, the method includes the following:

Step S301: Obtain a reference signal received power RSRP of cells in a measurement set of a user equipment (UE).

A specific implementation of obtaining an RSRP belongs to the prior art, such as a method defined in the 3GPP 36.214 protocol. The present invention sets no limit to the implementation of obtaining the RSRP.

In addition, the measurement set may be determined by using the following method: An eNodeB of a serving cell of a UE delivers a periodical measurement configuration to the UE; the UE, upon receiving the periodical measurement configuration, performs measurement on all available cells of a configured frequency point to obtain and report signal quality to the eNodeB of the serving cell; and the eNodeB adds a cell whose signal quality exceeds a threshold set by a network to the measurement set of the UE. It may also be specified to add cells having signal quality in several top-ranking places to the measurement set of the UE. The present invention sets no limit thereto.

Step S302: Determine a coordinated set of the UE according to the obtained RSRPs.

The coordinated set of the UE may be determined according to a value of the obtained RSRPs. It may be understood that, a cell having a greater RSRP value may be determined as a cell in the coordinated set in this step.

Step S303: Obtain a post-processing SINR (Posted-SINR) of the UE in the coordinated set and a post-processing SINR of the UE in a serving cell;

It may be understood that the obtaining the post-processing SINR may also be implemented by using the prior art, which is not described herein.

Step S304: Determine that the post-processing SINR of the UE in the coordinated set thereof is greater than the post-processing SINR in the serving cell thereof.

Specifically, a value of the post-processing SINR of the UE in the coordinated set and of the post-processing SINR of the UE in the serving cell may be compared by using a comparison method. When the post-processing SINR of the UE in the coordinated set thereof is greater than the post-processing SINR in the serving cell thereof, step S305 is performed. When the post-processing SINR of the UE in the coordinated set thereof is smaller than the post-processing SINR in the serving cell thereof, no CoMP is performed for the UE.

Step S305: Perform CoMP for the UE in step S304.

A specific method for performing CoMP may also be implemented by using the prior art.

According to the method provided by the embodiment of the present invention, a coordinated set of each user equipment is selected based on an RSRP first; and then a user equipment for which CoMP is to be performed is determined based on an SINR. This can effectively suppress an impact of an interference suppression gain on CoMP, and can reduce solution complexity.

Further, in the embodiment described above, the RSRP may be obtained by obtaining an RSRP of the UE in each cell in the measurement set in each TTI respectively, then the coordinated set of the UE is determined, and a UE is determined to perform CoMP in each TTI, which reflects a current actual condition for selecting the coordinated set in a more timely manner, thereby improving a performance gain of CoMP.

Even further, the coordinated set of the UE determined in step S302 may consists of the serving cell of the UE and a cell having a greatest RSRP among other cells than the serving cell of the UE in the measurement set. For example, assume that the measurement set of the UE includes three cells, which respectively are Cell 0, Cell 1, and Cell 2, where Cell 0 is the serving cell of the UE. Upon comparison, it is found that an RSRP of Cell 1 is greater than an RSRP of Cell 2; in such cases, Cell 0 and Cell 1 make a coordinated set, which may be expressed as {Cell0, Cell1}.

Indeed, according to actual requirements, for example, a coordinated set of a UE may include three or more cells. That is, the coordinated set of the UE consists of a serving cell of the UE, and first N cells having a greatest RSRP among other cells than the serving cell of the UE in a measurement set, where N is greater than or equal to 2. In an example where N=2, the coordinated set of the UE further includes, besides the serving cell of the UE, first 2 cells having a greatest RSRP among other cells than the serving cell of the UE in the measurement set. For example, assume that the measurement set of the UE includes four cells, which respectively are Cell 0, Cell 1, Cell 2, and Cell 3. Upon comparison, it is found that an RSRP of Cell 1 is greater than an RSRP of Cell 2, and the RSRP of Cell 2 is greater than an RSRP of Cell 3; in such cases, Cell 0, Cell 1, and Cell 2 make a coordinated set, which may be expressed as {Cell0, Cell1, Cell2}.

According to the above description, the embodiment of the present invention may be implemented regardless of whether the other cell than the serving cell in the coordinated set of the UE is one cell having a greatest RSRP, two top-ranking cells, three top-ranking cells, and the like.

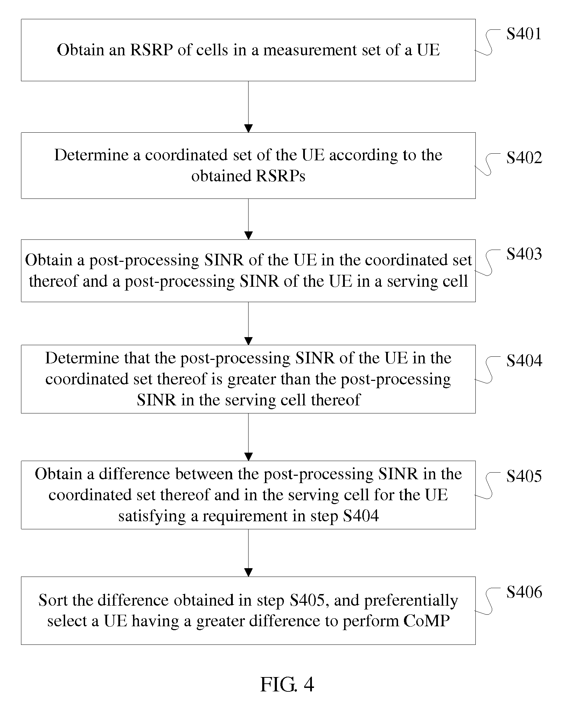

FIG. 4 is a schematic flowchart of a method for coordinated multi-point transmission/reception according to another embodiment of the present invention. As shown in FIG. 4, the method for coordinated multi-point transmission/reception according to this embodiment includes the following:
Step S401: Obtain a reference signal received power of cells in a measurement set of a UE.

Step S301 in the preceding embodiment may be similarly referenced to for a specific method.

Step S402: Determine a coordinated set of the UE according to the obtained RSRPs.

Step S302 in the preceding embodiment may be similarly referenced to for a specific method.

Step S403: Obtain a post-processing SINR of the UE in the coordinated set thereof and a post-processing SINR of the UE in a serving cell.

Step S303 in the preceding embodiment may be similarly referenced to for a specific method.

Step S404: Determine that the post-processing SINR of the UE in the coordinated set thereof is greater than the post-processing SINR in the serving cell thereof.

Step S304 in the preceding embodiment may be similarly referenced to for a specific method.

Step S405: After step S404, obtain a difference between the post-processing SINR in the coordinated set thereof and in the serving cell for the UE satisfying a requirement in step S404.

The UE satisfying the requirement in step S404 herein refers to a UE whose post-processing SINR in the coordinated set is greater than the post-processing SINR in the serving cell.

In this step, a difference between the post-processing SINR in the coordinated set and the post-processing SINR in the serving cell is obtained for each UE in step S404, where a specific difference may be obtained by using the prior art, such as subtraction, which is not described herein. It may be noted that a greater difference obtained in this step indicates a greater gain in a process of performing CoMP for a corresponding UE.

Step S406: Sort the difference obtained in step S405, and preferentially select a UE having a greater difference to perform CoMP.

Specifically, in this step, the obtained difference may be compared with one threshold, and a UE having a difference greater than a predefined threshold is selected to perform CoMP. Alternatively, the obtained difference may be sorted by size, and N top-ranking UEs are selected to perform CoMP. It may be understood that the two manners described above are similar in essence, both are selecting a UE having a greater difference to perform CoMP.

In this embodiment, CoMP is performed preferentially for a UE having a greater difference, which can sufficiently improve CoMP efficiency under limited resources.

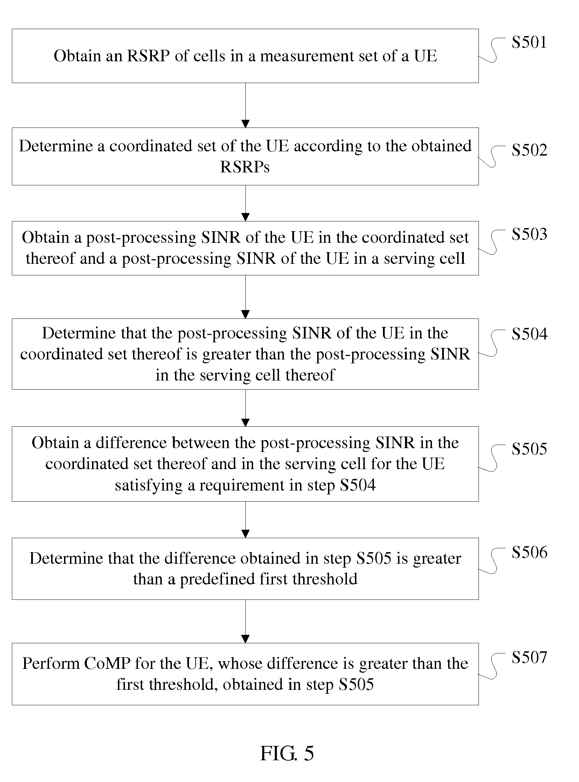

FIG. 5 is a schematic flowchart of a method for coordinated multi-point transmission/reception according to another embodiment of the present invention. As shown in FIG. 5, the method for coordinated multi-point transmission/reception according to this embodiment includes the following:
Step S501: Obtain a reference signal received power of cells in a measurement set of a UE.

Step S401 in the preceding embodiment may be similarly referenced to for a specific method.

Step S502: Determine a coordinated set of the UE according to the obtained RSRPs.

Step S402 in the preceding embodiment may be similarly referenced to for a specific method.

Step S503: Obtain a post-processing SINR of the UE in the coordinated set thereof and a post-processing SINR of the UE in a serving cell.

Step S403 in the preceding embodiment may be similarly referenced to for a specific method.

Step S504: Determine that the post-processing SINR of the UE in the coordinated set thereof is greater than the post-processing SINR in the serving cell thereof.

Step S404 in the preceding embodiment may be similarly referenced to for a specific method.

Step S505: After step S504, obtain a difference between the post-processing SINR in the coordinated set thereof and in the serving cell for the UE satisfying a requirement in step S504.

The UE satisfying the requirement in step S504 refers to a UE whose post-processing SINR in the coordinated set is greater than the post-processing SINR in the serving cell. Step S405 in the preceding embodiment may be similarly referenced to for a specific method.

Step S506: Determine that the difference obtained in step S505 is greater than a predefined first threshold.

It may be noted that a greater difference obtained in this step indicates a greater gain in a process of performing CoMP for a corresponding UE. Therefore, in this step, the difference obtained in step S505 is compared with the predefined first threshold, so as to find a UE whose difference is greater than the first threshold. It may be understood that a specific value of the first threshold may be determined based on a size of a gain for system performance, Specifically, a method such as simulation may be used, which is not described in detail herein.

Step S507: Perform CoMP for the UE, whose difference is greater than the first threshold, obtained in step S506.

According to the above description, in this embodiment, CoMP is not performed for all UEs whose post-processing SINR in the coordinated set is greater than the post-processing SINR in the serving cell, and CoMP is performed only for UEs whose difference between the post-processing SINR in the coordinated set and in the serving cell is greater than the first threshold. This saves resources for performing CoMP.

In addition, in the embodiment of the present invention, further, the performing, in step S507, CoMP for the UE whose difference obtained in step S505 is greater than the first threshold may specifically include: sorting a difference that is greater than the first threshold by size, and preferentially selecting a UE having a greater difference to perform CoMP. A greater difference indicates a greater gain in a process of performing CoMP for a UE corresponding to the difference. Hence, in this embodiment, CoMP is performed preferentially for a UE having a greater difference, which can sufficiently improve CoMP efficiency under limited resources.

In the embodiments described above, cells in the measurement set of the UE may belong to the same eNodeB or belong to different eNodeBs.

When the cells in the measurement set of the UE belong to the same eNodeB, intra-site CoMP (Intra-site CoMP) is implemented when performing CoMP for the UE.

When the cells in the measurement set of the UE belong to different eNodeBs and the coordinated set of the UE also includes cells belonging to at least two eNodeBs, inter-site CoMP is implemented when performing CoMP for the UE.

In addition, alternatively, in steps S303, S403, and S503 of the embodiments described above, the obtaining the post-processing SINR of the UE in the coordinated set may be specifically implemented as follows: setting a channel coefficient of other cells (which may be referred to as coordinated cells) than the serving cell of the UE in the coordinated set to zero, and obtaining the post-processing SINR thereof according to the coordinated set for which the channel coefficient is set to zero. This can avoid, in cases where a coordinated cell received signal is weak, a great impact of a channel estimation error of the coordinated cell on accuracy for determining the UE to perform CoMP. It may be understood that in the embodiments described above, a specific executing entity may all be an eNodeB or a device for coordinated multi-point transmission/reception of another type.

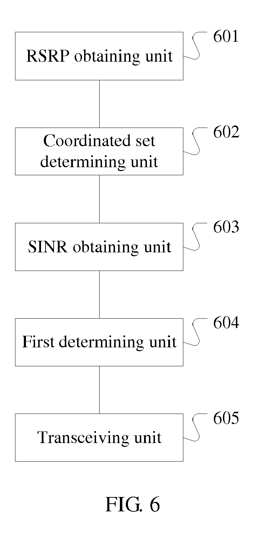

FIG. 6 is a schematic structural diagram of a device for coordinated multi-point transmission/reception according to an embodiment of the present invention. As shown in FIG. 6, the device for coordinated multi-point transmission/reception includes:
an RSRP obtaining unit 601, where the RSRP obtaining unit 601 is configured to obtain a reference signal received power RSRP of all cells in a measurement set of a user equipment UE;
a coordinated set determining unit 602, where the coordinated set determining unit 602 is configured to determine a coordinated set of the user equipment according to the RSRPs;
an SINR obtaining unit 603, where the SINR obtaining unit 603 is configured to obtain a Posted-SINR (post-processing SINR) of the UE in the coordinated set and a post-processing SINR of the UE in a serving cell;
a first determining unit 604, where the first determining unit 604 is configured to determine that the post-processing SINR of the UE in the coordinated set is greater than the post-processing SINR in the serving cell; and
a transceiving unit 605, where the transceiving unit 605 is configured to perform coordinated multi-point transmission/reception for the UE.

According to the device for coordinated multi-point transmission/reception provided by the embodiment of the present invention, a coordinated set of each user equipment is selected based on an RSRP first; and then a user equipment for which CoMP is to be performed is determined based on an SINR. This can effectively suppress an impact of an interference suppression gain on CoMP, and can reduce solution complexity.

In actual use, the device for coordinated multi-point transmission/reception in the embodiment may be an eNodeB.

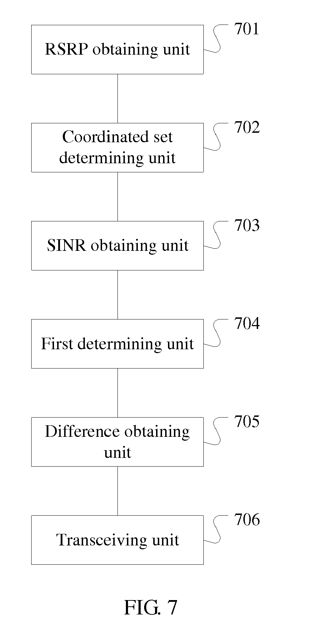

FIG. 7 is a schematic structural diagram of a device for coordinated multi-point transmission/reception according to another embodiment of the present invention. As shown in FIG. 7, the device for coordinated multi-point transmission/reception includes:
an RSRP obtaining unit 701, which performs a similar operation performed by the RSRP obtaining unit 601 in the fourth embodiment and is not described repeatedly herein;
a coordinated set determining unit 702, which performs a similar operation performed by the coordinated set determining unit 602 in the fourth embodiment and is not described repeatedly herein;
an SINR obtaining unit 703, which performs a similar operation performed by the SINR obtaining unit 603 in the fourth embodiment and is not described repeatedly herein;
a first determining unit 704, which performs a similar operation performed by the first determining unit 604 in the fourth embodiment and is not described repeatedly herein;
Also includes a difference obtaining unit 705 and a transceiving unit 706, where
the difference obtaining unit 705 is configured to obtain a difference between the post-processing SINR in the coordinated set and in the serving cell for the UE whose post-processing SINR in the coordinated set is greater than the post-processing SINR in the serving cell; and
the transceiving unit 706 is configured to sort the difference by size, and preferentially select a UE having a greater difference to perform coordinated multi-point transmission/reception.

A greater difference indicates a greater gain in a process of performing CoMP for a UE corresponding to the difference. Hence, in this embodiment, CoMP is performed preferentially for a UE having a greater difference, which can sufficiently improve CoMP efficiency under limited resources.

In actual use, the device for coordinated multi-point transmission/reception in the embodiment may be an eNodeB.

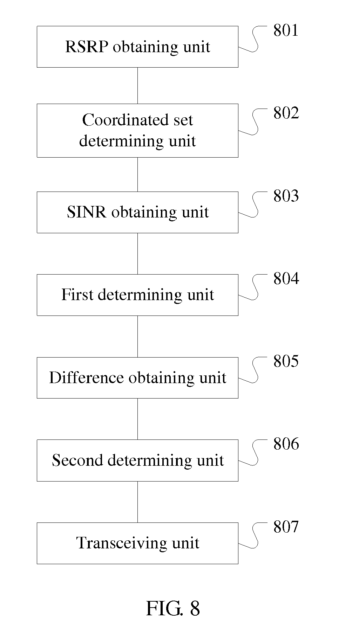

FIG. 8 is a schematic structural diagram of a device for coordinated multi-point transmission/reception according to another embodiment of the present invention. As shown in FIG. 8, the device for coordinated multi-point transmission/reception includes:
an RSRP obtaining unit 801, which performs a similar operation performed by the RSRP obtaining unit 601 in the fourth embodiment and is not described repeatedly herein;
a coordinated set determining unit 802, which performs a similar operation performed by the coordinated set determining unit 602 in the fourth embodiment and is not described repeatedly herein;
an SINR obtaining unit 803, which performs a similar operation performed by the SINR obtaining unit 603 in the fourth embodiment and is not described repeatedly herein;
a first determining unit 804, which performs a similar operation performed by the first determining unit 604 in the fourth embodiment and is not described repeatedly herein;
Also includes a difference obtaining unit 805, a second determining unit 806, and a transceiving unit 807; where
the difference obtaining unit 805 is configured to obtain a difference between the post-processing SINR in the coordinated set and in the serving cell for the UE whose post-processing SINR in the coordinated set is greater than the post-processing SINR in the serving cell;
the second determining unit 806 is configured to determine that the difference is greater than a first threshold; and
the transceiving unit 807 is configured to perform coordinated multi-point transmission/reception for a UE whose difference is greater than the first threshold.

In this embodiment, CoMP is not performed for all UEs whose post-processing SINR in the coordinated set is greater than the post-processing SINR in the serving cell, and CoMP is performed only for UEs whose difference between the post-processing SINR in the coordinated set and in the serving cell is greater than the first threshold. This saves resources for performing CoMP.

In addition, further, the transceiving unit 807 is specifically configured to sort the difference by size, and preferentially select a UE having a greater difference to perform coordinated multi-point transmission/reception.

The device for coordinated multi-point transmission/reception in the embodiment may be an eNodeB.

In an exemplary embodiment, the SINR obtaining unit of the device for coordinated multi-point transmission/reception in the embodiments described may set a channel coefficient of other cells than the serving cell in the coordinated set to zero, and obtain the post-processing SINR of the UE in the coordinated set according to the channel coefficient that is set to zero.

In addition, an embodiment of the present invention further provides a system, where the system includes a device for coordinated multi-point transmission/reception in the device embodiments described above.

The foregoing descriptions are merely exemplary embodiments of the present invention. It should be noted by a person skilled in the art that several modifications and variations may be made without departing from the principle of the invention, which should be construed as falling within the protection scope of the present invention.

## Claims

1. A method for CoMP coordinated multi-point transmission/reception, comprising:
Obtaining a reference signal received power RSRP of cells in a measurement set of a user equipment UE;
Determining a coordinated set of the UE according to the RSRPs;
Obtaining a post-processing SINR of the UE in the coordinated set and a post-processing SINR of the UE in a serving cell;
Determining that the post-processing SINR of the UE in the coordinated set is greater than the post-processing SINR in the serving cell; and
Performing coordinated multi-point transmission/reception for the UE.

2. The method according to claim 1, further comprising:
obtaining a difference between the post-processing SINR in the coordinated set and in the serving cell for the UE whose post-processing SINR in the coordinated set is greater than the post-processing SINR in the serving cell; and
the performing coordinated multi-point transmission/reception for the UE comprises:
sorting the difference by size, and preferentially selecting a UE having a greater difference to perform coordinated multi-point transmission/reception.

3. The method according to claim 1, further comprising:
obtaining a difference between the post-processing SINR in the coordinated set and in the serving cell for the UE whose post-processing SINR in the coordinated set is greater than the post-processing SINR in the serving cell;
determining that the difference is greater than a first threshold; and
the performing coordinated multi-point transmission/reception for the UE comprises:
performing coordinated multi-point transmission/reception for a UE whose difference is greater than the first threshold.

4. The method according to claim 3, wherein the performing coordinated multi-point transmission/reception for the UE whose difference is greater than the first threshold comprises:
sorting the difference by size, and preferentially selecting a UE having a greater difference to perform coordinated multi-point transmission/reception.

5. The method according to any one of claims 1 to 4, wherein the cells in the measurement set belong to the same eNodeB; or
the cells in the measurement set belong to different eNodeBs.

6. The method according to any one of claims 1 to 5, wherein the obtaining the post-processing SINR of the UE in the coordinated set comprises:
setting a channel coefficient of other cells than the serving cell in the coordinated set to zero, and obtaining the post-processing SINR of the UE in the coordinated set according to the channel coefficient that is set to zero.

7. The method according to any one of claims 1 to 6, wherein the obtaining the post-processing SINR of the UE in the coordinated set and the obtaining the post-processing SINR of the UE in the serving cell are performed in each transmission time interval (TTI) respectively.

8. The method according to any one of claims 1 to 7, wherein
the coordinated set of the UE consists of the serving cell of the user equipment and a cell having a greatest RSRP among other cells than the serving cell in the measurement set.

9. A device for coordinated multi-point transmission/reception, comprising:
an RSRP obtaining unit, configured to obtain a reference signal received power RSRP of all cells in a measurement set of a user equipment UE;
a coordinated set determining unit, configured to determine a coordinated set of the user equipment according to the RSRPs;
an SINR obtaining unit, configured to obtain a post-processing SINR of the UE in the coordinated set and a post-processing SINR of the UE in a serving cell;
a first determining unit, configured to determine that the post-processing SINR of the UE in the coordinated set is greater than the post-processing SINR in the serving cell; and
a transceiving unit, configured to perform coordinated multi-point transmission/reception for the UE.

10. The device according to claim 9, further comprising:
a difference obtaining unit, configured to obtain a difference between the post-processing SINR in the coordinated set and in the serving cell for the UE whose post-processing SINR in the coordinated set is greater than the post-processing SINR in the serving cell; and
the transceiving unit, specifically configured to sort the difference by size, and preferentially selecting a UE having a greater difference to perform coordinated multi-point transmission/reception.

11. The device according to claim 9, further comprising:
a difference obtaining unit, configured to obtain a difference between the post-processing SINR in the coordinated set and in the serving cell for the UE whose post-processing SINR in the coordinated set is greater than the post-processing SINR in the serving cell;
a second determining unit, configured to determine that the difference is greater than a first threshold; and
the transceiving unit, specifically configured to perform coordinated multi-point transmission/reception for a UE whose difference is greater than the first threshold.

12. The device according to claim 11, wherein the transceiving unit is specifically configured to sort the difference by size, and preferentially select a UE having a greater difference to perform coordinated multi-point transmission/reception.

13. The device according to any one of claims 9 to 12, wherein the SINR obtaining unit is specifically configured to set a channel coefficient of other cells than the serving cell in the coordinated set to zero, and obtain the post-processing SINR of the UE in the coordinated set according to the channel coefficient that is set to zero.

14. The device according to any one of claims 9 to 13, wherein the device is an eNodeB.

15. A system, comprising a device according to any one of claims 9 to 14.
